# EUROPÄISCHE PATENTSCHRIFT

(11) **EP 2 206 625 B1**
(45) Veröffentlichungstag und Bekanntmachung des Hinweises auf die Patenterteilung: **03.12.2014**
(21) Anmeldenummer: 09466027.1
(22) Anmeldetag: 17.12.2009
(51) Int. Cl.: B60N 2/36, B60R 7/02, B60R 13/01, B62D 25/20

(54) **Kofferraumboden für ein Automobil**
Boot floor for a motor vehicle
Plancher de coffre pour une automobile

(30) Priorität: 19.12.2008 CZ 20080822
(43) Veröffentlichungstag der Anmeldung: 14.07.2010
(73) Patentinhaber: Skoda Auto A.S., 293 60 Mladá Boleslav (CZ)
(72) Erfinder: Zdenek, Kohlert, 54901 Nove Mesto nad Metuji (CZ)

(56) Entgegenhaltungen:
- EP-A1- 1 484 220
- DE-A1- 4 334 354
- FR-A1- 2 726 795
- GB-A- 1 249 787
- US-A- 5 322 335

## Beschreibung

### Technisches Gebiet

Die Erfindung betrifft einen Kofferraumboden für ein Automobil, vor allem einen erhöhten Fahrzeugboden eines Personenkraftwagens mit umklappbaren und / oder verschiebbaren Fondsitzen.

### Bisheriger Stand der Technik

Gegenwärtig werden Personenkraftwagen mit variablen Fondsitzen ausgestattet, die in der Längsrichtung verschoben werden können und/oder deren Rückenlehnen in der Abhängigkeit der Anforderungen des komfortablen Sitzens bzw. des Kofferraumvolumens verstellbar sind. Ebenso werden diese mit einem erhöhten Kofferraumboden ausgestattet, welcher über dem Basiskofferraumboden im Bereich des Kofferraums angebracht ist. Der Basisboden wird in der Regel durch eine Abdeckung eines Reserverads gebildet und dieser liegt tief unter der Ladekante im Fahrzeugheck. Der erhöhte Boden wird in der Regel in einer Ebene mit dieser Kante platziert und erleichtert so die Beladung und vor allem das Entladen des Gepäcks zum Preis einer Verkleinerung des Kofferraumbereichs. So entsteht eine Stufe zwischen dem erhöhten Boden und der Basis der Sitzbefestigung, welche im Wesentlichen gleich der Ebene des Basisbodens ist.

Beim Verschieben der Fondsitze bzw. dem Umklappen derer Rücklehnen ändert sich die Entfernung zwischen der hinteren Rückenlehnenseite und der vorderen Endkante des erhöhten Bodens und an dieser Stelle entsteht ein nicht weiter geschützter Zwischenraum, durch welchen vor allem kleinere Gegenstände in den Bereich hinter die Fondsitze durchfallen können.

Eine Lösung des Kofferraumbodens mit einer Klappe ist bekannt aus US 5 322 335. Das Dokument offenbart eine Klappe, die durch eine Federkraft nach vorne in horizontale Lage umgeklappt ist und deswegen derer stabile Position nicht senkrecht, sondern horizontal ist.

D3 zeigt einen Koffenraumboden mit den Merkmalen des Oberbegriffs des Anspruchs 1.

### Darstellung der Erfindung

Die aufgeführte Nachteile beseitigt einer Kofferraumboden für ein Automobil laut der Erfindung, insbesondere einer erhöhte Fahrzeugboden eines Personenkraftwagens mit umklappbaren und / oder verschiebbaren Fondsitzen.

Der Boden ist im Bereich seiner Vorderkante wenigstens mit eine im Wesentlichen senkrechte Klappe versehen, die mittels einer Aufhängung flexibel und drehbar um die waagerechte Querachse eingelagert ist. Die Klappe kann aus ihrer stabilen im Wesentlichen senkrechten Position in Richtung nach hinten und/oder vorn geschwenkt werden. Dank der Möglichkeit der Schwenkung in Richtung nach hinten wird die Klappe bei einem Umlegen der Rückenlehne, bzw. der Sitzverschiebung in Richtung nach hinten, nicht beschädigt, sonder die klappt gemeinsam mit diesen nach hinten um. Die Hinterkante setzt zuerst auf die hintere Fläche der Rückenlehne auf und bei einer weiteren Bewegung verrutscht auf ihr. Nach der Zurückstellung der Sitze in die senkrechte Position, bzw. ihrer Verschiebung nach vorn, kehrt sich die Klappe selbststätig in ihre stabile im Wesentlichen senkrechte Position zurück.

Die Klappe kann vorteilhafterweise auch aus der stabilen Position in Richtung nach vorn bis in die waagerechte Position umgeklappt werden, wodurch die Beladung längerer bzw. umfangreicher Gegenstände nach einem Umklappen der Rückenlehne in Richtung nach vorn in die waagerechte Position ohne deren Beschädigung ermöglicht ist. Bei entsprechender Wahl der Dimensionen kann die Klappe auch den entstandenen Zwischenraum zwischen dem Boden und der Rückenlehnenhinterseite in dieser Position überbrücken.

Die Aufhängung, mittels welcher die Klappe eingelagert ist, ist vorteilhafterweise aus dem Material der Klappe gebildet. Diese ist vorteilhafterweise aus einem Material für Bodenverkleidung z.B. eines Teppichs gefertigt. Solches Material ist ausreichend flexibel, aber es weist auch eine ausreichende Steifigkeit für die Zurückstellung der Klappe in die stabile Position auf.

Die Klappe kann aus einem Streifen des Materials der Bodenverkleidung gebildet werden, umgelegtem im oberen Bereich der Klappenkante. Die Klappe ist dadurch steifer und zwischen beiden Teilen entsteht so eine Kammer, in die einfach eine Versteifung zur weiteren Verfestigung eingelegt werden kann und das vor allem zur Verfestigung im oberen Bereich der Klappenkante. Eine solche Versteifung kann ein Draht, ein Metallband bzw. ein anderes flexibles Material sein. Die Versteifung kann sich auf der gesamten Fläche der Klappe oder lediglich auf ihrem Teil befinden, vorteilhafterweise lediglich im Bereich ihrer Oberkante.

Bei der Auswahl eines weicheren Klappenmaterials ist die Klappe vorteilhafterweise durch ein flexibles Element ergänzt, vorteilhafterweise durch eine Torsionsfeder, zur Zurückstellung in ihre stabile Position.

Wenn die Klappe mit einer Versteifung ausgestattet ist, kann die Unterseite der Versteifung mit einer Längsnut zur Führung der Torsionsfeder während der Deformation versehen werden.

Wenn der Boden im Bereich der Vorderkante eine im wesentlichem senkrechte Fläche aufweist, welche den Höhenunterschied zwischen den Böden ausgleicht oder eine Stirn des erhöhten Bodens bildet, ist es vorteilhaft den überstehenden Bereich des ersten Teils der Klappe an diese senkrechte Fläche zu befestigen. Die stabile Position der Klappe befindet sich dann im Wesentlichen parallel zu dieser senkrechten Fläche ohne die Notwendigkeit einer weiteren Fixierung.

Die Drehachse der Klappe liegt vorteilhafterweise im Wesentlichen in der Ebene des Bodens, dadurch wird die Vereinigung der Klappe mit dem Boden beim Umklappen in die waagerechte Position nach vorn erreicht.

### Übersicht der Figuren der Zeichnungen

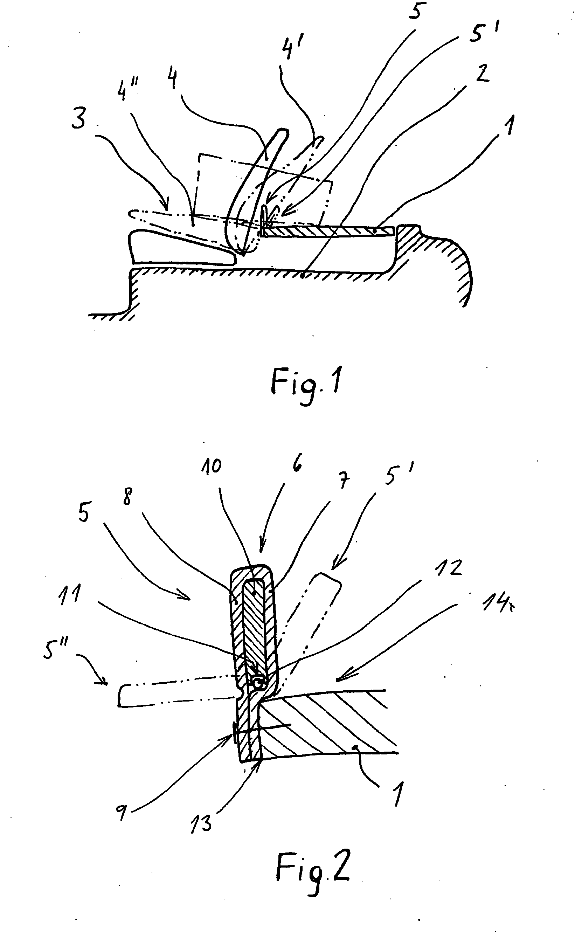

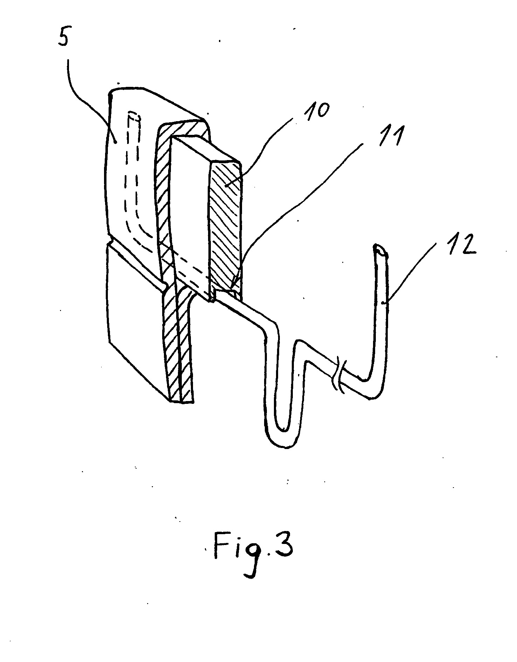

In der Fig. 1 ist einer Längsschnitt durch hinteren Bereich eines Automobils mit einem erhöhten Boden, die mit der Klappe laut der Erfindung versehen ist, dargestellt. Die Fig. 2 stellt ein Detail der Klappe im Längsschnitt und die Fig. 3 einen schematischen Schnitt der Klappe mit der Darstellung einer Federform dar.

### Ausführungsbeispiel der Erfindung

In den angehängten Figuren ist ein Beispiel einer möglichen Ausführung der Erfindung dargestellt. In der Fig. 1 ist ein hinteres Teil eines Automobils mit einem Grundboden **2** dargestellt, welcher unter dem Niveau der Ladekante liegt. Vor ihm sind Fondsitze **3** mit Rückenlehnen **4** befestigt, welche in einem bestimmten eingeschränkten Umfang umklappbar sind, damit der Passager die Möglichkeit hat, die entsprechende Neigung einzustellen. Über dem Grundboden **2** befindet sich ein herausnehmbarer erhöhter Boden **1,** welcher sich hinten bis zur Innenverkleidung erstreckt und vorn mittels einer Vorderkante **14** mit einer Distanz von der Hinterseite der Rückenlehne **4** endet. Diese Distanz ermöglicht das Umklappen der Rückenlehnen in Richtung nach hinten, denn der Drehmittelpunkt der Rückenlehne unter dem Bodenniveau liegt. Zum Boden **1** ist an der Stelle der Vorderkante **14** eine Klappe **5** befestigt. Die Fig. 2 stellt das Detail der Klappe dar. Die Klappe **5** wird aus einem Teppichstreifen gebildet, welcher oben umgelegt ist. Zwischen dem vorderen Teil **8** und dem hinteren Teil **7** der Klappe ist eine Versteifung **10** eingelegt, deren Unterkante mit einer längsverlaufenden Nut **11** versehen ist. Die Versteifung kann aus hohlem Kunststoffprofil mit durch Querwände getrennten länglichen Kammern gebildet werden, wobei die unterste Kammer keine äußere Querwand hat und so die Nut **11** bildet. Dadurch wird eine hohe Steifigkeit der Versteifung bei geringem Gewicht und preiswerter Fertigung erzielt.

Die Versteifung kann auch ein Band aus steifem Kunststoffband oder Metall sein, ggf. ein oben in die Falte der Klappe eingelegter Draht, und dieser kann entweder die gesamte Klappe versteifen, oder lediglich deren Oberkannte **6.** Der untere Teil der Klappe ist durch Kopfschrauben **9** an eine Bodenstirn **13** festgeschraubt, welche im Bedarfsfall in senkrechter Richtung nach unten zum Basisboden **2** vergrößert oder verlängert werden kann. In der Nut der Versteifung befindet sich eingelegt eine Torsionsfeder **12,** die im Wesentlichen die Form zweier übereinander befindlich Buchstaben "U" hat, wobei der untere eng und der obere sehr breit ist. Der untere Teil der Feder ist mittels der Schrauben **9** an die Bodenstirn **13** befestigt und die oberen Teile der Feder sind in der Versteifung eingesteckt. Die waagerechten Teile der Feder **12,** die sich beim Umklappen der Klappe **5** verdrehen, sind in der Nut **11** eingelagert. Zur Sicherstellung der korrekten Federposition **12** in der Nut **11** auch bei deren Verdrehung kann die Versteifung nach der Montage der Feder umwickelt sein, z.B. mittels Bänder, vor allem an den Enden der verdrehenden Teile.

In der senkrechten Grundposition der Rückenlehne **4** steht die Klappe **5** im Grunde senkrecht dank der Formstabilität des Teppichs. Bei ihrem Umklappen in Richtung nach hinten stützen sich diese durch ihre Hinterseite an der Oberkante **6** ab, die beim weiteren Umklappen auf dieser Hinterseite, bei gleichzeitiger Biegung der Klappe **5** in Richtung nach hinten um die Vorderkante **14** herum in die Position **5',** rutscht. Nach der Zurückstellung der Rückenlehnen **4** in die senkrechte Position bewegt sich die Klappe durch der Wirkung der Feder **12** selbststätig in die im Wesentlichen senkrechte Position zurück. Beim Umklappen der Rückenlehnen nach vorn, zur Vergrößerung des Kofferraums, kann die Klappe nach vorn in die waagerechte Position **5"** gebogen werden, wodurch es zur Abdeckung des Zwischenraums zwischen dem Boden **1** und der Hinterseite der Rückenlehnen **4** kommt. Dadurch wird das Hineinfallen von kleinen Gegenständen in den Bereich hinter die Sitze verhindert und die Klappe **5** fließt im Wesentlichen mit der Ebene der Ladefläche zusammen.

### Gewerbliche Anwendbarkeit

Den Kofferraumboden für ein Automobil laut der Erfindung kann bei allen Personenkraftwagen mit erhöhtem Boden und mit umklappbaren und/oder verschiebbaren Fondsitzen verwendet werden.

## Patentansprüche

1. Kofferraumboden (1) für ein Automobil, vor allem ein erhöhter Boden eines Personenkraftwagens mit umklappbaren und / oder verschiebbaren Fondsitzen (3), vorbei der im Bereich seiner Vorderkante (14) mit wenigstens einer im Wesentlichen senkrechten Klappe (5) versehen ist, die flexibel und drehbar um eine waagerechte Querachse mittels einer Aufhängung eingelagert ist, wobei die Klappe (5) aus ihrer stabilen im Wesentlichen senkrechten Position in Richtung nach vorn und / oder hinten schwenkbar ist, **dadurch gekennzeichnet, dass**, die Klappe (5) wenigstens im Bereich der Oberkante (6) mit einer Versteifung (10) und mit wenigstens einem flexiblen Element (12) in Form einer Torsionsfeder für die Zurückstellung in die stabile Position versehen ist, wobei die Unterkante der Versteifung (10) mit einer Längsnut (11) versehen ist, in der die Verdrehungsfeder (12) geführt ist.

2. Kofferraumboden für ein Automobil nach Anspruch 1, **dadurch gekennzeichnet, dass** die Aufhängung aus dem Material der Klappe (5) gebildet ist.

3. Kofferraumboden für ein Automobil nach einem der vorangegangenen Ansprüche, **dadurch gekennzeichnet, dass** die Klappe (5) aus einem Material für Bodenverkleidung gefertigt ist.

4. Kofferraumboden für ein Automobil nach dem Anspruch 3, **dadurch gekennzeichnet, dass** die Klappe (5) aus einem, im Bereich der Oberkante (6) der Klappe umgelegten Materialstreifen, gebildet ist.

5. Kofferraumboden für ein Automobil nach einem der vorangegangenen Ansprüche, **dadurch gekennzeichnet, dass** der im Bereich der Vorderkante (14) eine im Wesentlichen senkrechte Fläche (13) aufweist, an welche die Klappe (5) befestigt ist.

## Claims

1. Boot floor (1) for a motor vehicle, in particular a raised floor of a passenger car having foldable and/or displaceable rear seats (3), which is provided in the region of its front edge (14) with at least one substantially vertical flap (5) which is installed flexibly and rotatably about a horizontal transverse axis by means of a suspension, wherein the flap (5) can be pivoted from its stable substantially vertical position in the forward and/or rearward direction, **characterized in that** the flap (5) is provided at least in the region of the upper edge (6) with a reinforcement (10) and with at least one flexible element (12) in the form of a torsion spring for returning it to the stable position, wherein the lower edge of the reinforcement (10) is provided with a longitudinal groove (11) in which the torsion spring (12) is guided.

2. Boot floor for a motor vehicle according to Claim 1, **characterized in that** the suspension is formed from the material of the flap (5).

3. Boot floor for a motor vehicle according to either one of the preceding claims, **characterized in that** the flap (5) is produced from a material for floor lining.

4. Boot floor for a motor vehicle according to Claim 3, **characterized in that** the flap (5) is formed from a material strip folded over in the region of the upper edge (6) of the flap.

5. Boot floor for a motor vehicle according to one of the preceding claims, **characterized in that** the floor has, in the region of the front edge (14), a substantially vertical surface (13) to which the flap (5) is fastened.

## Revendications

1. Fond de coffre à bagages (1) pour une automobile, en particulier fond rehaussé d'un véhicule particulier comprenant des sièges arrière rabattables et/ou coulissants (3), celui-ci étant pourvu dans la région de son bord avant (14) d'au moins un volet (5) essentiellement vertical qui est inséré de manière flexible et rotative autour d'un axe transversal horizontal au moyen d'un accrochage, le volet (5) pouvant pivoter vers l'avant et/ou vers l'arrière depuis sa position stable essentiellement verticale, **caractérisé en ce que** le volet (5), au moins dans la région du bord supérieur (6), est pourvu d'un renforcement (10) et d'au moins un élément flexible (12) sous la forme d'un ressort de torsion pour le rappel dans la position stable, le bord inférieur du renforcement (10) étant pourvu d'une rainure longitudinale (11) dans laquelle est guidé le ressort de torsion (12).

2. Fond de coffre à bagages pour une automobile selon la revendication 1, **caractérisé en ce que** l'accrochage est formé à partir du matériau du volet (5).

3. Fond de coffre à bagages pour une automobile selon l'une quelconque des revendications précédentes, **caractérisé en ce que** le volet (5) est fabriqué en un matériau pour revêtement de sol.

4. Fond de coffre à bagages pour une automobile selon la revendication 3, **caractérisé en ce que** le volet (5) est formé d'une bande de matériau rabattue dans la région du bord supérieur (6) du volet.

5. Fond de coffre à bagages pour une automobile selon l'une quelconque des revendications précédentes, **caractérisé en ce que** le fond présente dans la région du bord avant (14) une surface essentiellement verticale (13) sur laquelle est fixé le volet (5).
